(19) Europäisches Patentamt
European Patent Office
Office européen des brevets

(11) **EP 4 062 251 B1**

(12) **EUROPÄISCHE PATENTSCHRIFT**

(45) Veröffentlichungstag und Bekanntmachung des Hinweises auf die Patenterteilung:
**13.03.2024 Patentblatt 2024/11**

(21) Anmeldenummer: **20810943.9**

(22) Anmeldetag: **19.11.2020**

(51) Internationale Patentklassifikation (IPC):
**G05D 16/20** *(2006.01)*

(52) Gemeinsame Patentklassifikation (CPC):
**G05D 16/202**

(86) Internationale Anmeldenummer:
**PCT/EP2020/082697**

(87) Internationale Veröffentlichungsnummer:
**WO 2021/099473 (27.05.2021 Gazette 2021/21)**

(54) **VORRICHTUNG UND VERFAHREN ZUM EINSTELLEN EINES DRUCKS IN EINEM SYSTEM**

DEVICE AND METHOD FOR SETTING A PRESSURE IN A SYSTEM

DISPOSITIF ET PROCÉDÉ DE RÉGLAGE D'UNE PRESSION DANS UN SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2019 DE 102019217994**

(43) Veröffentlichungstag der Anmeldung:
**28.09.2022 Patentblatt 2022/39**

(73) Patentinhaber: **Brach, Harald**
**87499 Wildpoldsried (DE)**

(72) Erfinder: **Brach, Harald**
**87499 Wildpoldsried (DE)**

(74) Vertreter: **MERH-IP Matias Erny Reichl Hoffmann**
**Patentanwälte PartG mbB**
**Paul-Heyse-Strasse 29**
**80336 München (DE)**

(56) Entgegenhaltungen:
**US-A- 3 805 930       US-A- 4 432 215**
**US-A1- 2012 227 830    US-A1- 2015 135 749**

**Beschreibung**

Die vorgestellte Erfindung betrifft ein Verfahren und eine Vorrichtung zum Einstellen eines Drucks in einem System und das entsprechende System.

Zahlreiche Anwendungen basieren auf der Beaufschlagung einer Vorrichtung mit einem Druck, der bspw. durch eine Pumpe bereitgestellt wird. Pumpen zeigen jedoch bauartbedingt in der Regel eine Varianz in ihrem bereitgestellten Druckverhalten.

Es sind Pumpen bekannt, die eine minimale Varianz in ihrem bereitgestellten Druckverhalten zeigen. Derartige Pumpen sind jedoch in der Regel technisch aufwendig und entsprechend teuer.

Zum Reparieren von Schadstellen in bspw. Fahrzeugscheiben können Reparatursysteme verwendet werden, die eine Schadstelle mit einem Füllmittel auffüllen und dadurch reparieren.

In der WO 2018/100100 A1 sind ein Verfahren und eine Vorrichtung zur Reparatur von Schadstellen beschrieben, bei dem eine Schadstelle mit verschiedenen Drücken in einer Sequenz von Druckphasen beaufschlagt wird, um ein besonders gründliches Befüllen einer Schadstelle mit Füllmittel zu ermöglichen.

Die US 4 432 215 A zeigt ein Dreiwegeventil für eine Heizpumpe eines Kühlschranksystems wobei das Dreiwegeventil mit einer Leckpassage mit einer entsprechenden Öffnung vorgesehen ist.

Die US 2015/135749 A1 zeigt ein Strömungsratenregulierungsventil, welches ein einem Kühlsystem einer Klimaanlage vorgesehen ist.

Die US 3 805 930 A zeigt eine pneumatische Kupplung und eine pneumatische Bremse für eine Nadel einer Nähmaschine.

Um eine Beschädigung eines zu reparierenden Gegenstands, wie bspw. einer Scheibe, zu vermeiden, ist ein exaktes Einhalten eines gewünschten die Schadstelle beaufschlagenden Drucks wichtig und vorteilhaft.

Es war daher eine Aufgabe der vorgestellten Erfindung, ein genaues und flexibles Einstellen eines Drucks in einem System zu schaffen.

Die Aufgabe wird gemäß den Merkmalen der unabhängigen Ansprüche gelöst. Die abhängigen Ansprüche betreffend vorteilhafte Weiterentwicklungen der Erfindung.

Die Erfindung betrifft in einem ersten Aspekt eine Vorrichtung zum Einstellen eines Drucks in einem System. Die Vorrichtung umfasst zumindest eine bewegliche Justiereinheit mit zumindest einer Öffnung und einen Fluidkanal. Der Fluidkanal umfasst eine Nebenstromöffnung zum Austritt eines Nebenstroms eines durch den Fluidkanal strömenden Fluids in eine Außenumgebung der Vorrichtung oder zum Eintritt eines Nebenstroms aus der Außenumgebung der Vorrichtung in den Fluidkanal und eine Hauptöffnung. Die Justiereinheit ist dazu konfiguriert, in einer Arbeitsstellung die Nebenstromöffnung zumindest bereichsweise zu überlagern und den Strömungsbereich der Nebenstromöffnung dadurch zu reduzieren.

Unter einer Justiereinheit ist im Kontext der vorgestellten Erfindung ein Element zu verstehen, das zumindest eine Öffnung aufweist und das beweglich in der vorgestellten Vorrichtung angeordnet ist. Die Justiereinheit kann als Scheibe, Quader oder jedes weitere geometrische Objekt ausgestaltet sein.

Unter einem Strömungsbereich ist im Kontext der vorgestellten Erfindung ein Bereich zu verstehen, in dem ein Fluid strömt. Insbesondere kann ein Strömungsbereich eine Fläche einer Öffnung eines Fluidkanals, wie bspw. eine Fläche einer Nebenstromöffnung, d.h. einer sogenannten "Bypassöffnung" sein.

Unter einer bereichsweisen Überlagerung einer Nebenstromöffnung ist im Kontext der vorgestellten Erfindung eine Anordnung eines Elements, wie bspw. der Justiereinheit an einem die Nebenstromöffnung umfassenden Fluidkanal zu verstehen, bei der die Justiereinheit einen Strömungsbereich der Nebenstromöffnung bereichsweise abdeckt bzw. verkleinert und ein Austritt von Fluid aus der Nebenstromöffnung nur durch einen freiliegenden Bereich möglich ist. Insbesondere kann die Nebenstromöffnung durch eine Öffnung in einer Justiereinheit überlagert werden, die entsprechend einen Strömungsbereich zum Strömen eines Fluids aus der Nebenstromöffnung durch die Öffnung der Justiereinheit freigibt. Dabei kann ein Durchmesser der Öffnung der Justiereinheit derart gewählt sein, dass ein die

Öffnung umgebendes bzw. bereitstellendes Material der Justiereinheit den Strömungsbereich der Nebenstromöffnung bereichsweise verdeckt, wie es der Fall ist, wenn die Öffnung der Justiereinheit kleiner ist als die Nebenstromöffnung.

Die vorgestellte Erfindung dient insbesondere dazu, einen Eingangsdruck, der bspw. von einer Pumpe bereitgestellt wird, kontrolliert zu reduzieren bzw. zu beeinflussen, um einen exakten Arbeitsdruck zu erreichen bzw. bereitzustellen, wobei der Arbeitsdruck im Falle eines Unterdrucks auch negativ sein kann. Dazu ist erfindungsgemäß ein Fluidkanal vorgesehen, der eine Hauptöffnung und eine Nebenstromöffnung umfasst.

Die vorgestellte Erfindung basiert auf einem Nebenstrom bzw. einer sogenannten "Zwangsleckage". Der Nebenstrom kann von einem mit einem Überdruck strömenden Fluidstrom bzw. einem Fluidkanal mit einem Überdruck abgeführt werden. Insbesondere kann vorgesehen sein, dass der Fluidstrom in einen Hauptstrom in einem Hauptfluidkanal und einen Nebenstrom in einem Nebenfluidkanal aufgeteilt wird, wobei der Hauptstrom mit einem gegenüber dem Fluidstrom reduzierten Arbeitsdruck strömt bzw. konstant gehalten wird. Alternativ kann der Nebenstrom einem mit einem Unterdruck beaufschlagten Hauptstrom zugeführt werden, um den Unterdruck auf eine größere Fluidmenge zu verteilen und, dadurch bedingt, auf einen Arbeitsdruck zu reduzieren. Entsprechend eignet sich die vorgestellte Vorrichtung zum Reduzieren von Überdruck und Unterdruck. Dabei kann, je nach Art eines anliegenden Drucks, eine Öffnung des Fluidkanals als Hauptöffnung bzw. Auslass oder als Einlass wirken, wobei die Nebenstromöffnung stets von einem Nebenstrom zu durchströmen ist bzw. durchströmt werden kann.

Insbesondere umfasst der Fluidkanal der vorgestellten Vorrichtung zumindest drei Öffnungen - eine Einlassöffnung zum Einströmen eines Fluidstroms mit einem Eingangsdruck, eine Hauptöffnung, an der ein Hauptstrom des Fluidstroms mit dem vorgegebenen Arbeitsdruck ausströmt bzw. anliegt, und eine Nebenstromöffnung, aus der ein Nebenstrom des Fluidstroms austritt oder in die ein Nebenstrom eintritt.

Durch einen Nebenstrom, der aus der erfindungsgemäß vorgesehenen Nebenstromöffnung austritt, wird ein Fluidstrom, der in die vorgestellte Vorrichtung einströmt, aufgeteilt in den Nebenstrom und einen Hauptstrom. Der Nebenstrom verlässt den Fluidkanal der Vorrichtung in eine Außenumgebung, der Hauptstrom durchströmt den Fluidkanal bis zur Hauptöffnung und entweicht durch die Hauptöffnung und/oder bleibt in dem Fluidkanal unter konstantem Arbeitsdruck. Durch die Aufteilung des Fluidstroms in Hauptstrom und Nebenstrom kann ein Arbeitsdruck an der Hauptöffnung sehr genau kontrolliert werden.

Alternativ dazu kann durch einen Nebenstrom, der in die erfindungsgemäß vorgesehene Nebenstromöffnung eintritt, ein Fluidstrom, der die vorgestellte Vorrichtung durchströmt, zu einem Hauptstrom ergänzt werden, der ggf. von einer Pumpe, wie bspw. einer Vakuumpumpe angesaugt wird. Durch die Anreicherung des Hauptstroms mit dem Nebenstrom können Strömungscharakteristika, insbesondere des Fluidstroms, sehr genau kontrolliert werden.

Die erfindungsgemäß vorgesehene Nebenstromöffnung kann eine in den Fluidkanal der vorgestellten Vorrichtung eingebrachte Öffnung oder ein Nebenstromkanal sein, der in eine in den Fluidkanal eingebrachte Öffnung mündet und die in den Fluidkanal eingebrachte Öffnung mit bspw. einer Außenumgebung der Vorrichtung verbindet.

Insbesondere ermöglicht die Aufteilung eines den Fluidkanal der vorgestellten Vorrichtung durchströmenden Fluidstroms in Hauptstrom und Nebenstrom mittels einer Nebenstromöffnung, dass ein Eingangsdruck des Fluidstroms, der einer bspw. durch eine jeweilige verwendete Pumpe bedingten Eingangsvarianz unterliegt, durch eine kontrollierte Abzweigung eines Nebenstroms bzw. eine Zwangsleckage, reduziert wird, sodass der resultierende Hauptstrom mit einem definierten reduzierten Arbeitsdruck und insbesondere, einer minimalen Varianz strömt bzw. vorliegt. Dies bedeutet, dass durch die vorgestellte Vorrichtung ein besonders gleichmäßiger bzw. ein mit einer minimal Varianz anliegender Arbeitsdruck bereitgestellt werden kann, der keine bzw. lediglich minimale bspw. durch Fertigungstoleranzen und/oder Umgebungsbedingungen bedingte Druckvarianzen zeigt.

Zum Aufteilen eines den Fluidkanal der vorgestellten Vorrichtung durchströmenden Fluidstroms in Hauptstrom und Nebenstrom umfasst die vorgestellte Vorrichtung eine Nebenstromöffnung. Die Nebenstromöffnung ist insbesondere derart ausgestaltet, dass diese einen großen bzw. starken Nebenstrom von dem Fluidstrom abzweigen kann, um auch bei hohem Eingangsdrücken einen reduzierten und genauen Arbeitsdruck einstellen zu können. Um eine Kontrolle, d.h. eine Steuerung bzw. Regelung des Arbeitsdrucks, mit dem der Hauptstrom durch die Hauptöffnung aus der vorgestellten Vorrichtung austritt bzw. an der Hauptöffnung anliegt, zu ermöglichen, kann eine Stärke bzw. eine Strömungscharakteristik des Nebenstroms mittels der erfindungsgemäß vorgesehenen Justiereinheit verändert werden. Dazu kann die Nebenstromöffnung durch eine Überlagerung mit der Justiereinheit stufenweise oder kontinuierlich verkleinert oder vergrößert werden, sodass weniger oder mehr Fluid bzw. ein geringerer oder größerer Nebenstrom in die Außenumgebung abgegeben wird und, dadurch bedingt, mehr oder weniger Fluid im Hauptstrom bleibt und dieser mit hohem oder geringem Druck aus der Hauptöffnung austritt.

Es kann vorgesehen sein, dass der Fluidkanal einen ersten Bereich und zumindest einen zweiten Bereich umfasst, wobei der erste Bereich den Nebenstrom zu der Nebenstromöffnung leitet, um einen Arbeitsdruck in dem zweiten Bereich einzustellen.

Die Justiereinheit reduziert einen Strömungsbereich der Nebenstromöffnung, indem diese durch die Justiereinheit zumindest bereichsweise überlagert wird. Dazu kann die Justiereinheit über die Nebenstromöffnung bewegt werden. Insbesondere kann die Justiereinheit die Nebenstromöffnung mittels einer Öffnung der Justiereinheit überlagern, sodass ein die Nebenstromöffnung durchströmender Nebenstrom durch die Öffnung der Justiereinheit bspw. reduziert bzw. begrenzt und, dadurch bedingt, ein Arbeitsdruck in dem Fluidkanal erhöht wird, verglichen mit einer nicht reduzierten Nebenstromöffnung.

Im Falle eines Unterdrucks kann die Justiereinheit einen größeren Strömungsbereich der Strömungsöffnung freigeben, um einen größeren Nebenstrom in den Fluidkanal zu leiten und einen in dem Fluidkanal anliegenden Unterdruck auf einen Arbeitsdruck zu reduzieren.

Durch eine Auswahl einer jeweiligen Öffnung der Justiereinheit zum Überlagern der erfindungsgemäß vorgesehenen Nebenstromöffnung kann auf den Arbeitsdruck eines durch den Fluidkanal der vorgestellten Vorrichtung strömenden Fluids derart eingewirkt werden, dass durch Auswahl besonders großer Öffnungen eine besonders starke Reduktion des Arbeitsdrucks und durch Auswahl besonders kleiner Öffnungen eines besonders geringe Reduktion des Arbeitsdrucks erfolgt. Entsprechend kann durch eine Veränderung der Öffnung bzw. durch Bewegen der erfindungsgemäß vorgesehenen Justiereinheit eine sukzessive Anpassung des Arbeitsdrucks erfolgen.

Je nach Art eines an der vorgestellten Vorrichtung bereitgestellten Fluids bzw. eines das Fluid beaufschlagenden Eingangsdrucks kann mittels der Vorrichtung ein Unterdruck oder ein Überdruck eingestellt werden.

Es kann weiterhin vorgesehen sein, dass die zumindest eine Öffnung der Justiereinheit graduell verjüngend ausgestaltet ist.

Durch eine sich graduell verjüngende Öffnung der Justiereinheit, die bspw. in Form eines Dreiecks oder in Form eines Tropfens ausgestaltet sein kann, kann eine kontinuierliche, d.h. graduelle Änderung eines Nebenstroms erreicht werden, sodass stufenartige Änderungen eines entsprechenden Arbeitsdrucks vermieden werden und der Arbeitsdruck besonders exakt eingestellt werden kann.

Ferner kann die Justiereinheit eine exzenterartige Führung aufweisen, die eine Trajektorie eines Außenumfangs bei einer Drehung derselben einstellen kann. Dadurch kann die Nebenstromöffnung von der Justiereinheit zunehmend bzw. graduell überlagert oder freigegeben werden, und ein durch die Nebenstromöffnung strömender Nebenstrom entsprechend kontinuierlich reduziert oder verstärkt werden.

Es kann vorgesehen sein, dass die zumindest eine Öffnung als eine Vielzahl von Bohrungen mit unterschiedlichem Durchmesser ausgestaltet ist.

Durch eine Vielzahl unterschiedlich großer Bohrungen kann eine stufenweise Änderung eines Nebenstroms erreicht werden, die besonders schnell bzw. einfach einstellbar ist.

Es kann weiterhin vorgesehen sein, dass die Justiereinheit zwischen einer Sperrstellung und einer Vielzahl Arbeitsstellungen beweglich ist, wobei die Justiereinheit in verschiedenen Arbeitsstellungen aus der Vielzahl von Arbeitsstellungen den Strömungsbereich der Nebenstromöffnung mit jeweils unterschiedlichen Überlagerungsbereichen reduziert.

Durch eine Vielzahl vorgegebener Arbeitsstellungen kann die Justiereinheit schnell und einfach eingestellt werden. Dazu kann bspw. einer jeweiligen Öffnung bzw. einem jeweiligen Öffnungsbereich eine konkrete Arbeitsstellung zugeordnet sein. Entsprechend kann die Justiereinheit bspw. unter Verwendung eines Mechanismus zwischen verschiedenen Arbeitsstellungen bewegt werden, indem die Justiereinheit um eine Achse, wie bspw. eine Rotationsachse der Justiereinheit, gedreht wird.

Mittels einer Sperrstellung, in der die Nebenstromöffnung vollständig blockiert bzw. abgedeckt wird, kann ein maximaler Druck in dem Fluidkanal erreicht werden.

Es kann weiterhin vorgesehen sein, dass die Vorrichtung zumindest einen Einlass zum Einleiten von Fluid in den Fluidkanal umfasst.

Ein Einlass kann im Kontext der vorgestellten Erfindung eine Öffnung oder eine Schnittstelle, wie bspw. ein Ventil zur Verbindung mit einer Fluidquelle sein. Insbesondere kann ein Einlass ein Anschluss an zumindest eine Pumpe sein. Es ist denkbar, dass ein Einlass der vorgestellten Vorrichtung als Adapterstück zum Verbinden mit einer Vielzahl Fluidquellen bzw. Pumpen ausgestaltet ist.

Es kann weiterhin vorgesehen sein, dass die Vorrichtung einen Drucksensor zum Erfassen eines Arbeitsdrucks eines an der Hauptöffnung ausströmenden Fluids und einen Aktuator zum Bewegen der Justiereinheit in Abhängigkeit von durch den Drucksensor ermittelten Messwerten umfasst.

Mittels eines Drucksensors und eines Aktuators kann eine automatische Kontrolle, d.h. eine automatische Steuerung bzw. eine Regelung in Form eines Regelkreises zum Bewegen der erfindungsgemäß vorgesehenen Justiereinheit erfolgen. Dabei kann der Aktuator bspw. derart kontrolliert werden, dass sich ein vorgegebener Arbeitsdruck und/oder eine vorgegebene Varianz des Arbeitsdrucks und/oder eine minimale Abweichung zu einem vorgegebenen Solldruck einstellt.

Es kann weiterhin vorgesehen sein, dass die Justiereinheit zumindest ein Rastelement umfasst, das in einer Arbeitsstellung der Justiereinheit mit einem Gegenrastelement wechselwirkt, um die Justiereinheit in einer bestimmten Drehposition bzw. Arbeitsstellung zu fixieren.

Mittels eines Rastelements und eines Gegenrastelements, wie bspw. einem Kugelkopf und einer Aufnahme oder einem Magneten mit einem ersten Pol und einem Magneten mit einem entsprechenden anderen Pol, oder jeder weiteren Art von Verbindungselementen, kann eine Fixation der Justiereinheit an einer vorgegebenen Arbeitsstellung erreicht werden, wodurch eine zeitaufwendige Feinjustierung unterbleiben kann.

Es kann weiterhin vorgesehen sein, dass die Vorrichtung zumindest ein Dichtungselement umfasst, das einen Bereich zwischen der Justierscheibe und einem die Nebenstromöffnung bildenden Bereich des Fluidkanals fluiddicht abdichtet.

Um eine Leckage zwischen Justiereinheit und Fluidkanal bei einem Austritt von Fluid aus der Nebenstromöffnung zu vermeiden bzw. zu minimieren, kann ein Dichtungselement, wie bspw. ein Dichtungsring zwischen der Justiereinheit und der Nebenstromöffnung, insbesondere im Bereich um die Öffnung der Justiereinheit, vorgesehen sein.

In einem zweiten Aspekt betrifft die vorgestellte Erfindung die Verwendung einer möglichen Ausgestaltung der vorgestellten Vorrichtung zum Einstellen eines Arbeitsdrucks eines durch zumindest eine Pumpe bereitgestellten Fluids.

In einem dritten Aspekt betrifft die vorgestellte Erfindung die Verwendung einer möglichen Ausgestaltung der vorgestellten Vorrichtung zum Einstellen einer Vielzahl Arbeitsdrücke einer Drucksequenz an einem Scheibenreparaturwerkzeug.

In einem vierten Aspekt betrifft die vorgestellte Erfindung ein Verfahren zum Einstellen eines Arbeitsdrucks in einem System. Das vorgestellte Verfahren umfasst die Schritte:

- Bereitstellen eines mit einem Eingangsdruck beaufschlagten Fluids, und/oder
- Bewegen einer Justiereinheit einer möglichen Ausgestaltung der vorgestellten Vorrichtung in eine Arbeitsstellung, in der die Justiereinheit die Nebenstromöffnung überlagert und den Strömungsbereich der Nebenstromöffnung reduziert.

Das vorgestellte Verfahren dient insbesondere zum Betrieb der vorgestellten Vorrichtung.

Es kann vorgesehen sein, dass die Justiereinheit zwischen verschiedenen Arbeitsstellungen, in denen die Nebenstromöffnung mit jeweils unterschiedlichen Überlagerungsbereichen bzw. unterschiedlich großen Öffnungen überlagert wird, bewegt wird, sodass der Hauptstrom des bereitgestellten Fluids bei verschiedenen Überlagerungsbereichen mit unterschiedlichen Strömungscharakteristika durch den Fluidkanal strömt bzw. ein unterschiedlicher Arbeitsdruck an der Hauptöffnung anliegt.

Durch eine Bewegung der Justiereinheit, bspw. gemäß einer vorgegebenen Bewegungsabfolge bzw. Sequenz von Überlagerungsbereichen oder verschiedenen Öffnungen, die zur Überlagerung der erfindungsgemäß vorgesehenen Nebenstromöffnung gebracht werden, kann eine Sequenz von unterschiedlichen Arbeitsdrücken erzeugt werden. Insbesondere kann die Justiereinheit zwischen einer Sperrstellung, in der kein Fluid aus der Nebenstromöffnung strömt und einer Vielzahl verschiedener oder gleicher Arbeitsstellungen bewegt werden, sodass ein vorbestimmter Arbeitsdruckverlauf erzeugt wird. Dabei kann, je nach Form jeweiliger verwendeter Öffnungen der Justiereinheit, ein gradueller oder ein sukzessiver Übergang zwischen verschiedenen Druckphasen erreicht werden.

Es kann weiterhin vorgesehen sein, dass die Bewegung der Justiereinheit automatisch, mittels eines in Abhängigkeit eines Drucksensors erfassten Arbeitsdrucks an der Hauptöffnung kontrollierten Aktuators bewegt wird.

Durch eine Auswertung eines Arbeitsdrucks eines an der Hauptöffnung der vorgestellten Vorrichtung austretenden bzw. vorliegenden Fluids kann eine dynamische Anpassung eines Nebenstroms erfolgen, sodass bspw. temporäre Varianzen, wie bspw. tageszeitabhängige oder temperaturabhängige Druckunterschiede besonders effizient und vollautomatisch ausgeglichen werden können.

In einem weiteren Aspekt betrifft die vorgestellte Erfindung ein System, insbesondere ein Schadstellenreparatursystem. Das System umfasst zumindest eine Pumpe zum Bereitstellen eines Fluids mit einem Eingangsdruck und eine mögliche Ausgestaltung der vorgestellten Vorrichtung zum Reduzieren des Eingangsdrucks auf zumindest einen vorgegebenen Arbeitsdruck.

Es kann vorgesehen sein, dass das System ein Schadstellenreparaturwerkzeug umfasst. Das Schadstellenreparaturwerkzeug ist durch die zumindest eine Pumpe mit einem Druck zu beaufschlagen, der durch die Vorrichtung einstellbar ist.

Ein mittels der vorgestellten Vorrichtung eingestellter Arbeitsdruck eignet sich in besonders vorteilhafter Weise zum Betrieb eines Schadstellenreparatursystems, insbesondere zum Reparieren von Scheiben aus Glas, da varianzbedingte Über- bzw. Unterdrücke mittels der vorgestellten Vorrichtung vermieden bzw. minimiert werden und ein Beschädigung einer Scheibe dadurch nahezu ausgeschlossen ist.

Die Erfindung erlaubt somit eine permanente, hochgenaue, einfache und/oder schnelle Justierung eines Arbeitsdrucks in einem System. Dadurch ist auch möglich eine Vielzahl von Pumpen durch eine zu ersetzen und dadurch Kosten zu sparen und das System zu vereinfachen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:

Fig. 1 eine mögliche Ausgestaltung der erfindungsgemäßen Vorrichtung,

Fig. 2 eine Seitenansicht der erfindungsgemäßen Justiereinheit,

Fig. 3 eine perspektivische Ansicht der Justiereinheit,

Fig. 4 eine weitere mögliche Ausgestaltung der erfindungsgemäßen Justiereinheit,

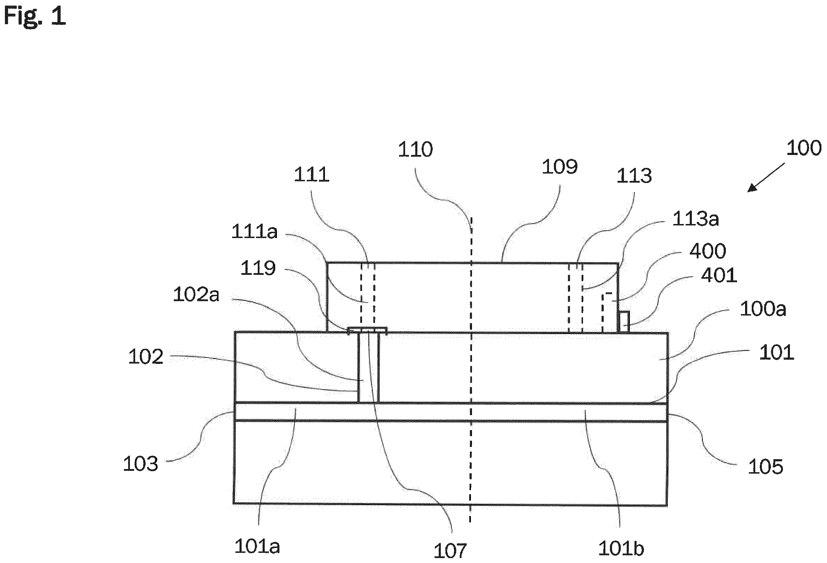

In Fig. 1 ist eine Vorrichtung 100 zum Einstellen eines Drucks in einem System dargestellt.

Die Vorrichtung 100 umfasst einen Fluidkanal 101 mit einen Einlass 103, einer Hauptstromöffnung 105 und einer Nebenstromöffnung 107.

Ferner umfasst die Vorrichtung 100 eine Justiereinheit 109 mit zumindest einer ersten Öffnung 111 und einer zweiten Öffnung 113. Die Justiereinheit 109 weist weiterhin zumindest einen ersten Kanal 111a und einen zweiten Kanal 113a auf.

Zum Einstellen eines Arbeitsdrucks von einem Fluid, das aus der Hauptöffnung 105 aus dem Fluidkanal 101 austritt bzw. an der Hauptöffnung 105 anliegt, ist an dem Fluidkanal 101 ein Nebenfluidkanal 102 mit einer Nebenstromöffnung 107 vorgesehen.

Durch die Nebenstromöffnung 107 wird, im Falle eines positiven Eingangsdrucks, ein Fluidstrom 101a, der mit einem Eingangsdruck in den Fluidkanal 101 über den Einlass 103 einströmt, in einen Nebenstrom 102a und einen Hauptstrom 101b aufgeteilt. Dies bewirkt, dass, durch eine Veränderung des Nebenstroms 102a auf Strömungscharakteristika des Hauptstroms 101b, insbesondere auf dessen Arbeitsdruck, eingewirkt werden kann.

Alternativ, im Falle eines negativen Drucks, wird durch die Nebenstromöffnung 107 ein Fluidstrom 101a, der durch den Fluidkanal 101 strömt, mit einem Nebenstrom 102a angereichert, um den negativen Druck zu reduzieren, d.h. in Richtung eines positiven Werts zu verschieben.

Zum Verändern des Nebenstroms 102a ist die erfindungsgemäße Justiereinheit 109 vorgesehen. Da bspw. die erste Öffnung 111 einen kleineren Durchmesser hat als die zweite Öffnung 113, bedingt die erste Öffnung 111, wenn diese in Überlagerung zu der Nebenstromöffnung 107 gebracht wird, einen geringen Nebenstrom 102a bzw. einen Nebenstrom 102a, der geringer ist, bzw. einen kleineren Volumenstrom aufweist, als ein Nebenstrom 102a, der bei Überlagerung der Nebenstromöffnung 107 durch die zweite Öffnung 113 entsteht.

Durch die Abzweigung des Nebenstroms 102a von dem in den Fluidkanal 101 strömenden Fluidstrom 101a werden automatisch Varianzen, wie bspw. Druckspitzen, in denen besonders viel Fluid durch den Fluidkanal 101 strömt, abgefangen bzw. abgepuffert. Entsprechend zeigt der Hauptstrom 101b, nachdem der Nebenstrom 102a abgezweigt wurde, einen besonders gleichmäßigen Druckverlauf bzw. eine niedrige Varianz, insbesondere eine Varianz, die kleiner ist als die Varianz des durch den Einlass 103 in den Fluidkanal 101 einströmenden Fluidstroms 101a.

Je nach angestrebtem Arbeitsdruck und/oder je nach anliegendem Eingangsdruck kann zumindest zwischen der ersten Öffnung 111 und der zweiten Öffnung 113 gewechselt werden, indem die Justiereinheit 109 bewegt bzw. um eine Achse 110 gedreht wird. Entsprechend kann, um bspw. einen geringen Arbeitsdruck einzustellen, die zweite Öffnung 113 mit einem großen Durchmesser zum Überlagern der Nebenstromöffnung 107 gewählt werden. Alternativ kann, um einen hohen Arbeitsdruck einzustellen, die erste Öffnung 113 mit einem kleinen Durchmesser zum Überlagern der Nebenstromöffnung 107 gewählt werden.

Die Justiereinheit 109 kann mittels eines optionalen Aktuators automatisch bewegt werden, um zwischen den Öffnungen 111 und 113 zu wechseln. Dazu kann der Aktuator 115 in Abhängigkeit von mittels eines ebenfalls optionalen Drucksensors ermittelten Messwerten eines Arbeitsdrucks bzw. eines Eingangsdrucks gesteuert bzw. geregelt werden.

Zwischen der Justiereinheit 109 und dem Nebenfluidkanal 102 ist ein Dichtungselement 119 vorgesehen, das zum Vermeiden einer Leckage eines Fluids beim Strömen durch eine der Öffnungen 111 oder 113 der Justiereinheit 109 vorgesehen sein kann. Dadurch kann sichergestellt werden, dass nach dem Einstellen der Justiereinheit 109 eine fluiddichte Verbindung zwischen einem Grundelement 100a und der Justiereinheit 109 erfolgt.

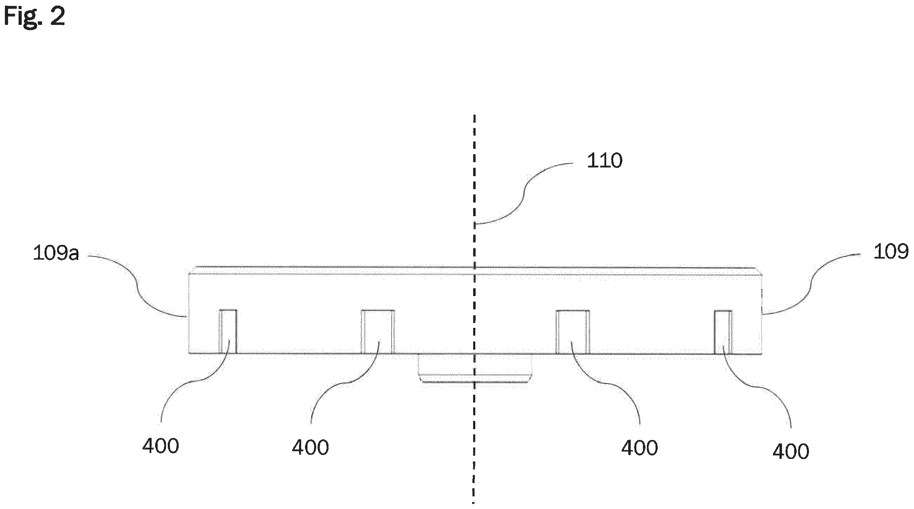

In Fig. 2 ist die Justiereinheit 109 in einer Seitenansicht dargestellt. An einem Außenumfang 109a sind Einbuchtungen 400 vorgesehen. In den vorbestimmten Arbeitsstellungen, in denen jeweils eine Öffnung 111, 113 über der Nebenstromöffnung 107 angeordnet ist, kann ein Rastelement 401 (siehe Fig. 1) in eine Einbuchtung 400 eingreifen und dadurch die Position der Justiereinheit 109 gegenüber der Nebenstromöffnung 107 dauerhaft festlegen. Dadurch ist ein stufenweises Einstellen und anschließendes Festlegen der Position der Justiereinheit 109 in optimaler Weise möglich.

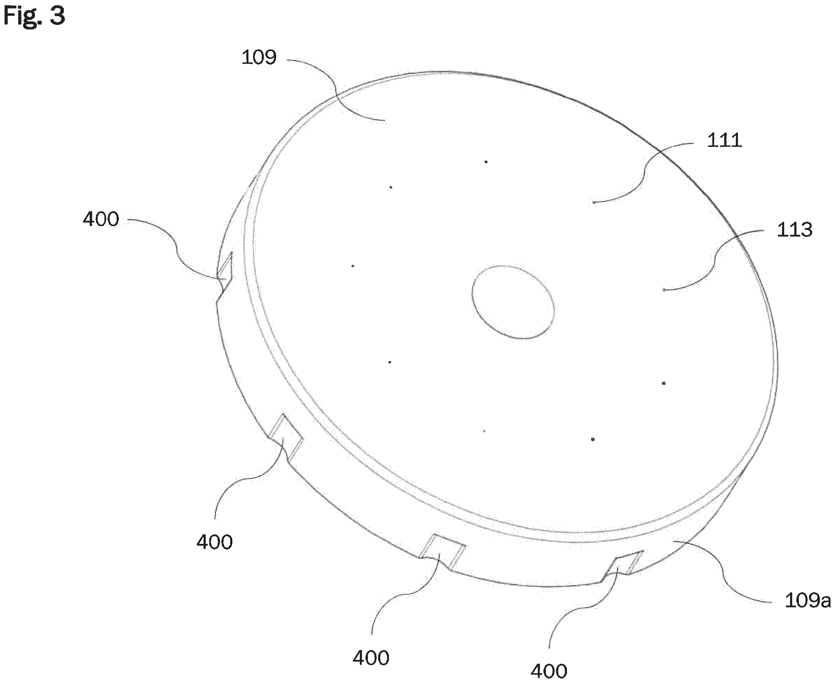

Fig. 3 zeigt eine perspektivische Ansicht der Justiereinheit 109. An der Oberseite sind mehrere Öffnungen 111, 113 mit unterschiedlichen Durchmessern vorgesehen. Die Abstufungen der Durchmesser können bspw. so gewählt werden, dass sich ein Druckunterschied im Fluidkanal 101a bzw. an der Hauptöffnung 105 von $^1/_{10}$ bar ergibt. Die folgenden Durchmesser sind lediglich nicht einschränkende Beispiele: 0,130, 0,140, 0,150, 0,160, 0,170, 0,180, 0,190, 0,200, 0,210 mm.

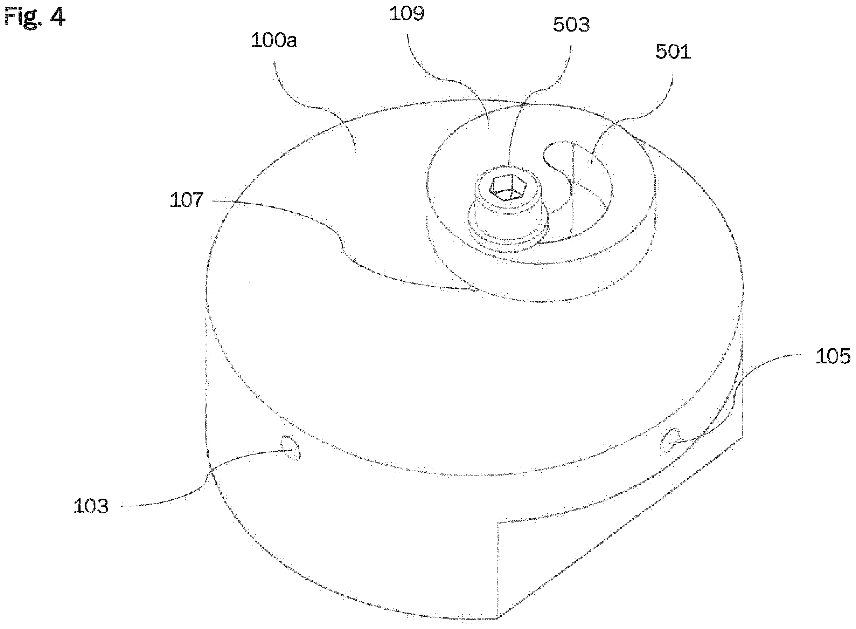

In Fig. 4 ist eine weitere Ausgestaltung der Justiereinheit 109 mit einer exzentrischen Führungsöffnung 501 und einem Klemmelement 503, das in die Führungsöffnung 501 eingreift, dargestellt. Durch eine Bewegung der Justiereinheit 109 entlang des Klemmelements 503, das gegenüber dem Grundelement 100a positionsfest ist, bewegt sich die Justiereinheit 109 entlang einer durch eine Form der Führungsöffnung 501 vorgegebenen Trajektorie, wie es bspw. für einen Exzenter typisch ist. Die vorgegebene Trajektorie kann derart gewählt sein, dass die Justiereinheit 109 eine Nebenstromöffnung 107 gemäß einer vorgegebenen Kennlinie verdeckt. Insbesondere kann die Trajektorie linear oder rotatorisch gewählt werden. Nachdem der passende Überdeckungsgrad der Nebenstromöffnung 107 eingestellt wurde, kann das Klemmelement 503 über eine Schraube die Justiereinheit 107 gegenüber dem Grundelement 100a festlegen.

Der an der Hauptöffnung 105 anliegende Druck wird mittels des überlagerten bzw. verdeckten Strömungsbereichs der Nebenstromöffnung 107 angepasst, sodass sich ein vorgegebener Arbeitsdruck an der Hauptöffnung 105 einstellt.

## Bezugszeichenliste

| 100 | Vorrichtung |
|---|---|
| 100a | Grundelement |
| 101 | Fluidkanal |
| 101a | Fluidstrom |
| 101b | Hauptstrom Hauptstrom |
| 102 | Nebenfluidkanal |
| 102a | Nebenstrom |

| 103 | Einlass |
| 105 | Hauptöffnung |
| 107 | Nebenstromöffnung |
| 109 | Justiereinheit |
| 109a | Außenumfang |
| 110 | Achse |
| 111 | erste Öffnung |
| 111a | erster Kanal |
| 113 | zweite Öffnung |
| 113a | zweiter Kanal |
| 119 | Dichtungselement |
| 400 | Einbuchtung |
| 401 | Rastelement |
| 501 | Führungsöffnung |
| 503 | Klemmelement |

**Patentansprüche**

1. Vorrichtung zum Einstellen eines Drucks in einem System,

    wobei die Vorrichtung (100) umfasst:

        - zumindest eine Justiereinheit (109) mit zumindest einer Öffnung (111, 113),
        - einen Fluidkanal (101),

    wobei der Fluidkanal (101) einen Einlass (103), eine Nebenstromöffnung (107) zum Austritt eines Nebenstroms (102a) eines durch den Fluidkanal (101) strömenden Fluids in eine Außenumgebung der Vorrichtung (100) und eine Hauptöffnung (105) umfasst, und
    wobei die Justiereinheit (109) dazu konfiguriert ist, in einer Arbeitsstellung die Nebenstromöffnung (107) zumindest bereichsweise zu überlagern und dadurch den Strömungsbereich der Nebenstromöffnung (107) zu reduzieren,
    **dadurch gekennzeichnet dass**
    die Justiereinheit (109) dazu konfiguriert ist, die Nebenstromöffnung (107) mittels der zumindest einen Öffnung (111, 113) zu überlagern und dadurch den Strömungsbereich der Nebenstromöffnung (107) mittels der zumindest einen Öffnung (111, 113) zu reduzieren.

2. Vorrichtung nach Anspruch 1,
wobei die zumindest eine Öffnung (111, 113) als eine Vielzahl von Bohrungen mit unterschiedlichem Durchmesser ausgestaltet ist.

3. Vorrichtung nach Anspruch 1,
wobei die zumindest eine Öffnung (111, 113), der Justiereinheit (109) sich graduell verjüngend ausgestaltet ist.

4. Vorrichtung nach zumindest einem der voranstehenden Ansprüche,
wobei die Justiereinheit (109) in verschiedenen Arbeitsstellungen den Strömungsbereich der Nebenstromöffnung (107) mit jeweils unterschiedlichen Überlagerungsbereichen reduziert.

5. Vorrichtung nach zumindest einem der voranstehenden Ansprüche,
wobei die Justiereinheit (109) zumindest eine Einbuchtung (400) umfasst, die in einer Arbeitsstellung der Justiereinheit (109) mit einem Rastelement (401) wechselwirkt, um die Justiereinheit (109) in einer gewünschten Drehposition zu fixieren.

6. Vorrichtung nach zumindest einem der voranstehenden Ansprüche,
wobei ein Drucksensor zum Erfassen eines Drucks im Hauptstrom (101b) und ein Aktuator zum Bewegen der Justiereinheit (109) in Abhängigkeit von durch den Drucksensor (117) ermittelten Messwerten vorgesehen sind.

7. Vorrichtung nach zumindest einem der voranstehenden Ansprüche,
wobei die Vorrichtung (100) zumindest ein Dichtungselement (119) umfasst, das einen Bereich zwischen der Justiereinheit (109) und einem die Nebenstromöffnung (107) bildenden bzw. umgebenden Bereich des Nebenfluidkanals (102) im Wesentlichen fluiddicht abdichtet.

8. Verwendung der Vorrichtung nach zumindest einem der voranstehenden Ansprüche zum Einstellen eines Drucks eines durch zumindest eine Pumpe bereitgestellten Fluids.

9. Verwendung einer Vorrichtung (100) nach zumindest einem der Ansprüche 1 bis 7 zum Einstellen einer Vielzahl Arbeitsdrücke einer Drucksequenz an einem Scheibenreparaturwerkzeug.

10. Verfahren zum Einstellen eines Drucks in einem System,
wobei das Verfahren die folgenden Schritte umfasst:

    - Bereitstellen eines mit einem Eingangsdruck beaufschlagten Fluids,
    - Bewegen einer Justiereinheit (109) einer Vorrichtung (100) nach zumindest einem der Ansprüche 1 bis 7 in eine Arbeitsstellung, in der die Justiereinheit (109) die Nebenstromöffnung (107) überlagert und den Strömungsbereich der Nebenstromöffnung (107) reduziert.

11. Verfahren nach Anspruch 10,
wobei die Bewegung der Justiereinheit (109) zum Überlagern der Nebenstromöffnung (107) automatisch, mittels eines Aktuators in Abhängigkeit eines von einem Drucksensor erfassten Arbeitsdrucks in einem Hauptstrom (101b) der Vorrichtung (100) erfolgt.

12. System,

   wobei das System umfasst:

   - zumindest eine Pumpe zum Bereitstellen eines Fluids mit einem Eingangsdruck,
   - eine Vorrichtung (100) nach zumindest einem der Ansprüche 1 bis 7 zum Reduzieren des Drucks an einer Hauptöffnung (105) auf zumindest einen vorgegebenen Arbeitsdruck,

   wobei die Vorrichtung einen Einlass (103) zum Koppeln mit der zumindest einen Pumpe umfasst.

13. System nach Anspruch 12,
   wobei das System ein Schadstellenreparaturwerkzeug umfasst, und wobei das Schadstellenreparaturwerkzeug durch die zumindest eine Pumpe mit einem Arbeitsdruck zu beaufschlagen ist, der durch die Vorrichtung (100) einstellbar ist.

**Claims**

1. Device for adjusting a pressure in a system, wherein

   the device (100) is comprising:

   - at least one adjustment unit (109) having at least one opening (111, 113),
   - a fluid passage (101), wherein

   the fluid passage (101) comprises an inlet (103), a by-pass opening (107) for discharging a secondary stream (102a) of a fluid flowing through the fluid passage (101) to an outside environment of the device (100), and a main opening (105), and wherein
   the adjustment unit (109) is configured to, in a working position, at least partially overlap the by-pass opening (107) and thereby reduce the flow area of the by-pass opening (107),
   **characterized in that**:
   the adjustment unit (109) is configured to overlap the by-pass opening (107) with the at least one opening (111, 113) and thereby reduce the flow area of the bypass opening (107) with the at least one opening (111, 113).

2. The device according to claim 1, wherein
   the at least one opening (111, 113) is configured as a plurality of boreholes having different diameters.

3. The device according to claim 1, wherein
   the at least one opening (111, 113) of the adjustment unit (109) is configured to gradually taper.

4. The device according to any one of the preceding claims, wherein
   the adjustment unit (109) reduces the flow area of the by-pass opening (107) in different working positions using different overlapping areas, respectively.

5. The device according to any one of the preceding claims, wherein
   the adjustment unit (109) comprises at least one indentation (400) which interacts with a latching element (401) in a working position of the adjustment unit (109) to secure the adjustment unit (109) in a desired rotational position.

6. The device according to any one of the preceding claims, wherein
   a pressure sensor for detecting a pressure in the main stream (101b) and an actuator for moving the adjustment unit (109) depending on measured values determined by the pressure sensor (117) are provided.

7. The device according to any one of the preceding claims, wherein
   the device (100) comprises at least one sealing unit (119) which seals a region between the adjustment unit (109) and a region of the secondary fluid passage (102) forming or surrounding the by-pass opening (107) substantially impermeably.

8. Use of the device (100) according to any one of the preceding claims for adjusting a pressure of a fluid provided by at least one pump.

9. Use of a device (100) according to any one of claims 1 to 7 for setting a plurality of working pressures of a pressure sequence on a disk repair tool.

10. A method for adjusting a pressure in a system, wherein the method is comprising the steps of:

   - providing a fluid pressurized with an input pressure,
   - positioning an adjustment unit (109) of a device (100) according to any one of claims 1 to 7 to an operating position in which the adjustment unit (109) overlaps the by-pass opening (107) and reduces the flow area of the by-pass opening (107).

11. The method according to claim 10, wherein
   the step of moving the adjustment unit (109) to overlap the by-pass opening (107) is automatically executed using an actuator depending on a working pressure in a main stream (101b) of the device (100) detected by a pressure sensor.

12. A system, wherein
the system is comprising:

- at least one pump for providing a fluid having an input pressure,
- a device (100) according to any one of claims 1 to 7 for reducing the pressure at a main opening (105) to at least a predetermined working pressure, wherein

the device (100) comprises an inlet (103) for connecting said at least one pump.

13. The system according to claim 12, wherein

the system comprises a repair tool, and wherein the repair tool is to be pressurized by said at least one pump with a working pressure which is adjustable by said device (100).

**Revendications**

1. Dispositif de réglage d'une pression dans un système, le dispositif (100) comprenant :

- au moins une unité d'ajustement (109) ayant au moins une ouverture (111, 113),
- un canal à fluide (101),
le canal à fluide (101) présentant une entrée (103), une ouverture de flux secondaire (107) pour la sortie d'un flux secondaire (102a) d'un fluide s'écoulant à travers le canal à fluide (101) jusque dans un environnement extérieur du dispositif (100), et une ouverture principale (105), et l'unité d'ajustement (109) étant configurée pour, dans une position de travail, recouvrir au moins partiellement l'ouverture de flux secondaire (107) et pour ainsi réduire la zone d'écoulement de l'ouverture de flux secondaire (107), **caractérisé en ce que** l'unité d'ajustement (109) est configurée pour recouvrir l'ouverture de flux secondaire (107) au moyen de ladite au moins une ouverture (111, 113) et pour ainsi réduire la zone d'écoulement de l'ouverture de flux secondaire (107) au moyen de ladite au moins une ouverture (111, 113).

2. Dispositif selon la revendication 1,
dans lequel ladite au moins une ouverture (111, 113) est conçue comme une pluralité de perçages de différents diamètres.

3. Dispositif selon la revendication 1,

dans lequel ladite au moins une ouverture (111, 113) de l'unité d'ajustement (109) est conçue de manière à se rétrécir graduellement.

4. Dispositif selon l'une au moins des revendications précédentes,
dans lequel, dans différentes positions de travail, l'unité d'ajustement (109) réduit la zone d'écoulement de l'ouverture de flux secondaire (107) avec différentes zones de recouvrement respectives.

5. Dispositif selon l'une au moins des revendications précédentes,
dans lequel l'unité d'ajustement (109) présente au moins une indentation (400) qui, dans une position de travail de l'unité d'ajustement (109), interagit avec un élément d'encliquetage (401) pour fixer l'unité d'ajustement (109) dans une position de rotation souhaitée.

6. Dispositif selon l'une au moins des revendications précédentes,
dans lequel sont prévus un capteur de pression, destiné à détecter une pression dans le flux principal (101b), et un actionneur, destiné à déplacer l'unité d'ajustement (109) en fonction des valeurs de mesure déterminées par le capteur de pression (117).

7. Dispositif selon l'une au moins des revendications précédentes,
dans lequel le dispositif (100) comprend au moins un élément d'étanchéité (119) qui rend sensiblement étanche aux fluides une zone située entre l'unité d'ajustement (109) et une zone du canal à fluide secondaire (102) formant ou entourant l'ouverture de flux secondaire (107).

8. Utilisation du dispositif selon l'une au moins des revendications précédentes pour régler la pression d'un fluide fourni par au moins une pompe.

9. Utilisation d'un dispositif (100) selon l'une au moins des revendications 1 à 7 pour régler une pluralité de pressions de travail d'une séquence de pressions sur un outil de réparation de vitres.

10. Procédé de réglage d'une pression dans un système,
le procédé comprenant les étapes suivantes consistant à :

- fournir un fluide soumis à une pression d'entrée,
- déplacer une unité d'ajustement (109) d'un dispositif (100) selon l'une au moins des revendications 1 à 7 jusque dans une position de travail dans laquelle l'unité d'ajustement (109) recouvre l'ouverture de flux secondaire (107) et réduit la zone d'écoulement de l'ouverture de flux secondaire (107).

11. Procédé selon la revendication 10, dans lequel le mouvement de l'unité d'ajustement (109) pour recouvrir l'ouverture de flux secondaire (107) est effectué automatiquement, au moyen d'un actionneur, en fonction d'une pression de travail dans un flux principal (101b) du dispositif (100), détectée par un capteur de pression.

12. Système,

le système comprenant :

- au moins une pompe pour fournir un fluide avec une pression d'entrée,
- un dispositif (100) selon l'une au moins des revendications 1 à 7 pour réduire la pression au niveau d'une ouverture principale (105) à au moins une pression de travail prédéterminée,

le dispositif présentant une entrée (103) destinée à être couplée à ladite au moins une pompe.

13. Système selon la revendication 12, dans lequel le système comprend un outil de réparation de zone endommagée, et l'outil de réparation de zone endommagée doit être alimenté par ladite au moins une pompe avec une pression de travail qui est réglable par le dispositif (100).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018100100 A1
- US 4432215 A
- US 2015135749 A1
- US 3805930 A